# EUROPEAN PATENT APPLICATION

(11) **EP 4 557 581 A1**
(43) Date of publication of application: **21.05.2025**
(21) Application number: 23210628.6
(22) Date of filing: 17.11.2023
(51) Int. Cl.: H02K 3/12, H02K 3/22, H02K 5/20, H02K 9/19, H02K 9/197

(54) **HOLLOW CONDUCTORS IN AN ELECTRICAL MACHINE**

(71) Applicant: Scania CV AB, 151 87 Södertälje (SE)
(72) Inventor: NESS, Christian, 155 92 Nykvarn (SE); BIRKESTAD, Per, 120 63 Stockholm (SE); ENGSTRÖM, Jörgen, 147 71 Grödinge (SE); AFRIDI, Usman, 152 31 Södertälje (SE)
(74) Representative: Scania CV AB

(57) **Abstract**

A hollow conductor (200) forming a continuous wave winding (210) of a stator (120). The stator (120) and a rotor (110) are forming an electrical machine (100). The wave winding (210) is formed by distribution of the conductor (200) around the stator periphery in a winding pattern between axial endings (301, 302) of the winding (210). A first axial ending (301) is flooded by cooling fluid in a first cooling cavity (510) and a second axial ending (302) is flooded by cooling fluid in second cooling cavity (520). The first axial ending (301) comprises a first set of holes (310) and the second axial ending (302) comprises a second set of holes (320), thereby allowing cooling fluid to flow from the first cooling cavity (510), via the first set of holes (310), through a respective section of the hollow conductor (210), to the second cooling cavity (520).

## Description

### TECHNICAL FIELD

This document discloses a hollow conductor forming a continuous wave winding of a stator according to the appended patent claims. This document further relates to an electrical machine and a vehicle comprising an electrical machine.

### BACKGROUND

Modern electric machines such as electric motors, generators and/ or alternators are often based on the concept of a rotor with magnets, coaxially arranged to rotate within a stator, in order to achieve required performance.

The stator comprises windings made by an electrically transmissive coil of wire. When the windings are provided with alternating current, magnets comprised in the rotor are affected and causes the rotor to start rotating.

Due to resistance in the windings, for example hairpin windings/ continuous windings, heat is developed. High power in limited machine size is often desired when electric machines are used in vehicle propulsion systems and similar industrial applications.

In order to electrify commercial vehicles, it is crucial to reach a good continuous performance of the electric machine to guarantee continuous torque and power to fulfil startability requirements over a long time and different conditions. To avoid overheating, cooling may be applied, by applying cooling fluid via a cooling channel in the stator.

Existing electric machines of the above kind however exhibit poor cooling characteristics of the windings and the stator. Overheating of the stator will decrease efficiency of electric machines, affecting performance and lifetime of the involved components. Insulation layers may melt, for example.

It would be desired to find a solution addressing at least some of the above issues and improve cooling of electric machines, thereby improving capacity of high continuous power and torque.

### SUMMARY

It is therefore an object of this invention to solve at least some of the above problems and improve cooling capacity of stator windings in an electric machine.

According to a first aspect of the invention, this objective is achieved by a hollow conductor forming a continuous wave winding of a stator. The stator is forming an electrical machine in conjunction with a rotor. The continuous wave winding is formed by uniform distribution of the hollow conductor around the stator periphery in a winding pattern forming multiple parallel paths between axial endings of the winding.

A first axial ending of the winding is flooded by cooling fluid in a first cooling cavity and a second axial ending of the winding is flooded by cooling fluid in second cooling cavity. The first axial ending of the winding comprises a first set of holes and the second axial ending of the winding comprises a second set of holes. Cooling fluid is thereby allowed to flow from the first cooling cavity, via the first set of holes, through a respective section of the hollow conductor, to the second cooling cavity via the second set of holes, when the cooling fluid is acted upon by a pump.

Thanks to the provided solution, cooling fluid is allowed to flow from the first cooling cavity, through the hollow conductor to the second cooling cavity, thereby efficiently reducing temperature of the continuous stator winding. The flooded end windings further enhance the cooling efficiency.

Efficient cooling of the conductor brings improved capacity of the electrical machine; the electrical machine is enabled to handle increased electrical loads i.e., higher power output, without overheating.

The electrical resistance of the conductor is temperature dependent. By reducing the temperature, the electrical resistance is also reduced, leading to improved performance of the electrical machine, either by delivering more power or using less energy for the same output.

Lower temperatures also reduce thermal expansion and stress on the windings and insulation materials, thereby preventing deformation and structural failure over time. A more efficient cooling by the hollow conductors will also enhance the longevity of the stator winding, as the aging rate of insulation materials is temperature dependent, i.e., accelerated by increasing temperature.

Optionally, the first set of holes in the first axial ending and the second set of holes in the second axial ending may be distributed for allowing a hotter section of the hollow conductor to be in vicinity of a cooler section of the hollow conductor.

The term "vicinity" is to be interpreted as "within a limited physical distance". The terms "hotter section" and "cooler section" relates to the respective section temperature in relation to each other, i.e., the hotter section has a higher temperature than the cooler section. However, the hotter section is not necessarily the hottest section of the winding and the cooler section is not necessarily the coldest section thereof, even though this case would bring the most benefits in terms of equalisation of the temperature of the winding.

It is desired to reduce temperature of hot spots in the system, i.e., equalising the temperature between different sections of the winding.

Concerning the vicinity of the sections, the best cooling effect will be achieved when the hotter section is in direct physical contact with the cooler section, for example in the same stator slot. However, the equalising of temperatures will be achieved also when the hotter section and the cooler section are situated at a distance from each other, or for example two steps away radially in the same stator slot, will have an advantageous cooling effect on the hotter section. The cooler conductor will also cool the iron of the stator, which in turn will have a damping effect on the hot-spot temperature of the hotter conductor.

Hereby, an improved equalisation of the temperature of distinct sections of the winding is achieved. The temperature of winding hot spots is efficiently reduced thanks to the efficient cooling.

Optionally, the first set of holes in the first axial ending and the second set of holes in the second axial ending may be distributed for allowing cooling fluid entering the first set of holes in the first axial ending to flow in the continuous wave winding between the axial endings at least three times before entering the second cooling cavity via the second set of holes.

An advantage is that the cooling efficiency of the cooling fluid is maximised, or at least very increased.

Optionally, the first set of holes may comprise one hole made in every third turn of the continuous wave winding in the first axial ending. Also, the second set of holes may comprise one hole made in every third turn of the continuous wave winding in the second axial ending.

Thereby, an even distribution of cooling fluid is provided, leading to an improved distribution of heat of the conductor, i.e., reduction of temperature of conductor hot spots.

Optionally, the flow of cooling fluid through the hollow conductor may be reversable, such that cooling fluid is absorbed from the second cooling cavity via the second set of holes, through the hollow conductor to the first cooling cavity via the first set of holes.

Thereby an enhanced heat exchange is provided.

According to a second aspect of the invention, this objective is achieved by an electrical machine. The electrical machine comprises a stator and a rotor. The stator is configured to hold a continuous wave winding. The rotor is configured to operate coaxially inside the stator. The electrical machine also comprises a hollow conductor forming the continuous wave winding, according to the first aspect.

Reduced heat development, thanks to the improved cooling effect, leads to a lower gap between peak and continuous performance, thereby enabling higher continuous power density and torque of the electrical machine is achieved.

According to a third aspect of the invention, this objective is achieved by a vehicle. The vehicle comprises an electrical machine according to the second aspect of the invention.

Other advantages and additional novel features will become apparent from the subsequent detailed description.

### FIGURES

Embodiments of the invention will now be described in further detail with reference to the accompanying figures, in which:
- **Figure 1A**: illustrates an end section of an electrical machine according to an embodiment.
- **Figure 1B**: illustrates a cross section A-A of an electrical machine according to an embodiment.
- **Figure 2**: illustrates a stator and a winding of an electrical machine according to an embodiment, and a cross section B-B of the conductor forming the winding.
- **Figure 3**: illustrates a stator winding of an electrical machine according to an embodiment, wherein the stator winding comprises holes for passage of cooling fluid throw the hollow conductor.
- **Figure 4**: illustrates a stator winding of an electrical machine according to an embodiment, wherein the stator winding comprises holes for passage of cooling fluid throw the hollow conductor.
- **Figure 5**: illustrates a side view of a cross section of an electrical machine according to an embodiment.
- **Figure 6**: illustrates a vehicle comprising an electrical machine with a stator winding formed by a hollow conductor, according to an embodiment.

### DETAILED DESCRIPTION

Embodiments of the invention described herein are defined as a hollow conductor, an electrical machine and a vehicle comprising the electrical machine which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

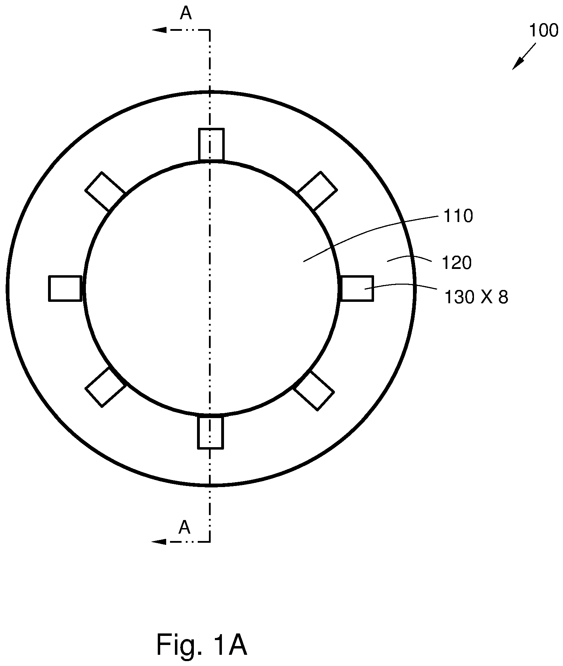

Figure 1A illustrates an example of an end section of an electric machine 100, as regarded from an axial view. The electric machine 100 comprises a rotor 110 and a stator 120. The stator 120 is enclosing the coaxially arranged rotor 110.

The rotor 110 is rotatably disposed on an inward side of the stator 120 with an air gap distance between the rotor surface and the stator 120, creating a radial clearance distance between the rotor 110 and the stator 120. Thus, the rotor 110 forms a rotating part of the electrical machine 100 while the stator 120 forms a stationary part thereof.

The rotor 110 may comprises a number of magnets creating a magnetic field which, when the rotor 110 is rotating, generates electrical current due to induction, when the electrical machine 100 operates in generator mode. Alternatively, the rotor 110 may comprise windings creating a magnetic field, when current is generated in the rotor winding by a power source in the rotor 110 instead of magnets. This may be referred to as a field wound rotor.

The electrical machine 100 may be configured for converting electrical energy into mechanical energy thereby operating as an electric motor. The electrical machine 100 may also, or alternatively comprise an electric generator, which has the same configuration as an electric motor but operates with a reversed flow of power, converting mechanical energy into electrical energy.

The electrical machine 100 may be comprised in a vehicle and be configured to propel the vehicle while driving thereby operating as an electric motor. In case the vehicle is driving down-hill and/ or braking, the electrical machine 100 instead may operate as an electric generator, generating electricity which may be stored in a battery.

The stator 120 comprises a plurality of radially extending stator slots 130, radially arranged about a common central axis of the stator 120, wherein the stator slots 130 are located apart, equidistantly from each. In the illustrated embodiment, there are eight stator slots, but this is merely a non-limiting example. The part of the stator 120 between the stator slots 130 may be referred to as teeth. The stator slots 130 comprises windings, for example in form of hair pin windings, sometimes referred to as Form-Wound Coils. Other possible alternatives may be so called orthocyclic windings, and/ or concentrated windings.

The stator slots 130 may be open, closed or semi-closed in different embodiments. The open stator slot 130 may have substantially flat walls extending to a radially inner delimiting surface of the stator 120. In other embodiments, the walls of the open stator slot 130 may have other configurations, e.g., a convex/ concave profile, an oval profile, etc. Open stator slots 130 are easily implemented. In the open stator slots 130, assembly and repair of winding are easy.

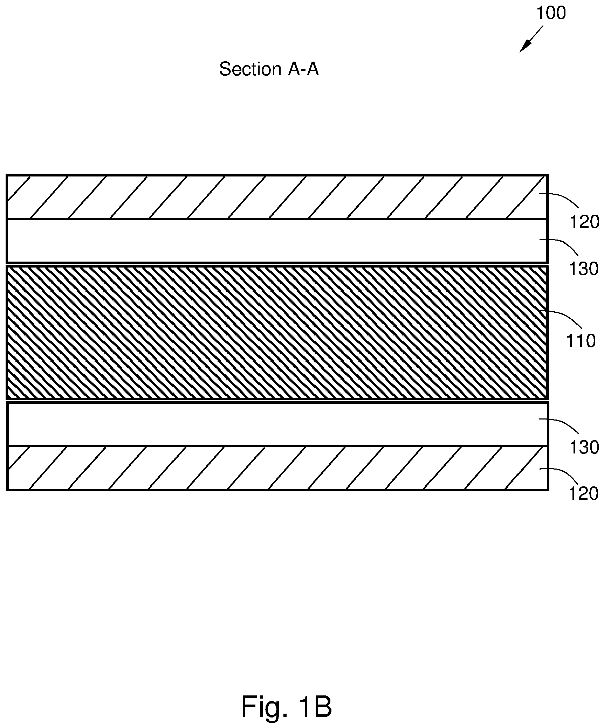

The stator slots 130 are configured for receiving a hollow conductor forming a continuous wave winding in axial direction of the electrical machine 100. A cross section A-A of the electrical machine 100 is illustrated in Figure 1B.

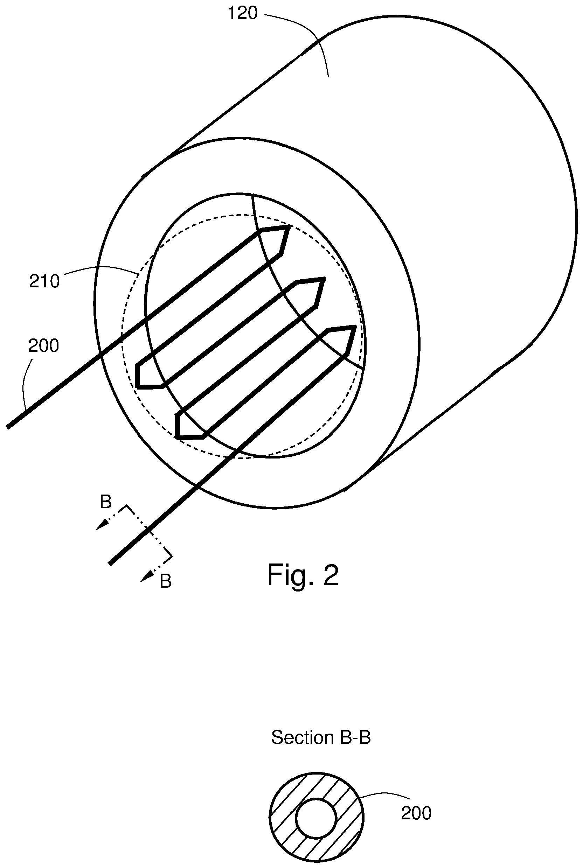

Figure 2 illustrates a stator 120 and a winding 210 of an electrical machine 100 according to an embodiment, and a cross section B-B of the hollow conductor 200 forming the winding 210.

The hollow conductor 200 is hollow in order to allow passage of cooling fluid, thereby cooling the conductor 200. The hollow conductor 200 may be made of copper, a copper alloy or other metal or metal alloy with similar physical properties in terms of heat conduction as copper. The hollowness of the conductor 200 may be circular, or approximately circular in some embodiments, but may in alternative embodiments have another cross section shape, such as quadratic, octagonal, hexagonal, etc. The outer diameter of the conductor 200 may be circular, but may possibly have another cross section shape, such as quadratic, octagonal, hexagonal, etc.

The proportions between the outer diameter and the inner diameter of the hollow conductor 200 may be selected in order to avoid a too large pressure fall when the cooling fluid passes the windings, while still allowing sufficient heat conducting properties. The proportions may thereby be selected based on several factors, such as selected material of the conductor 200, length of the stator 120, number of layers of conductor sections forming the continuous wave winding of the stator 120, outer diameter of the conductor 200, physical properties of the selected cooling fluid, capacity of the pump, etc. A non- limiting example of proportion may be e.g., about 1/2 - 1/3.

The cooling fluid may for example be oil, water, or a mixture of water and glycol. Oil has several advantages as cooling fluid, before water. Oil has a higher boiling point than water and can be used for cooling the electrical machine 100, even if water cooling also may exceed 100 degrees Celsius when pressurised. Oil is also an electrical insulator, why an accidental leak of cooling fluid does not cause any hazard, besides, the interruption/ disturbance in cooling.

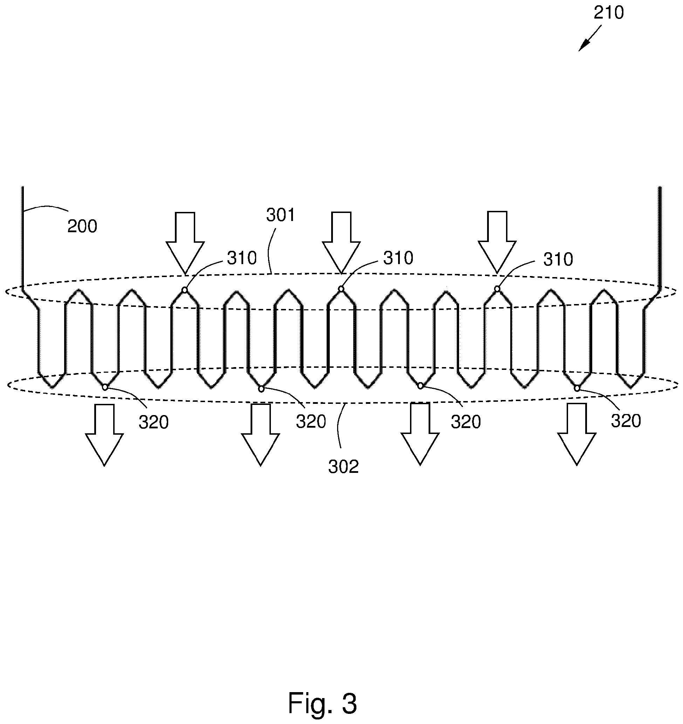

Figure 3 illustrates the stator winding 210 before mounting into the stator slots 130 of the stator 120. The stator winding 210 comprises a first set of holes 310 in a first axial ending 301, and a second set of holes 320 in a second axial ending 302.

The holes 310, 320 may be drilled in the respective axial endings 301, 302. Thus, the holes 310, 320 may typically be circular in diameter. However, in alternative embodiments, the holes 310, 320 may be quadratic, rectangular, hexagonal, octagonal, etc. The diameter of the holes 310, 320 may for example be approximately similar to the inner diameter of the hollow conductor 200, or possibly somewhat larger (e.g., 10%-30%), to avoid or at least reduce pressure fall.

During operation of the electric machine 100, the stator winding 210 is applied in the stator 120. Cooling fluid submerges a first cavity around the first end windings. The cooling fluid is allowed to enter the hollow conductor 200 via the first set of holes 310, pass through the stator winding 210 and to be evacuated via the second set of holes 320 in the second axial ending 302, to a second cavity, in which the second end windings are cooled by the cooling fluid.

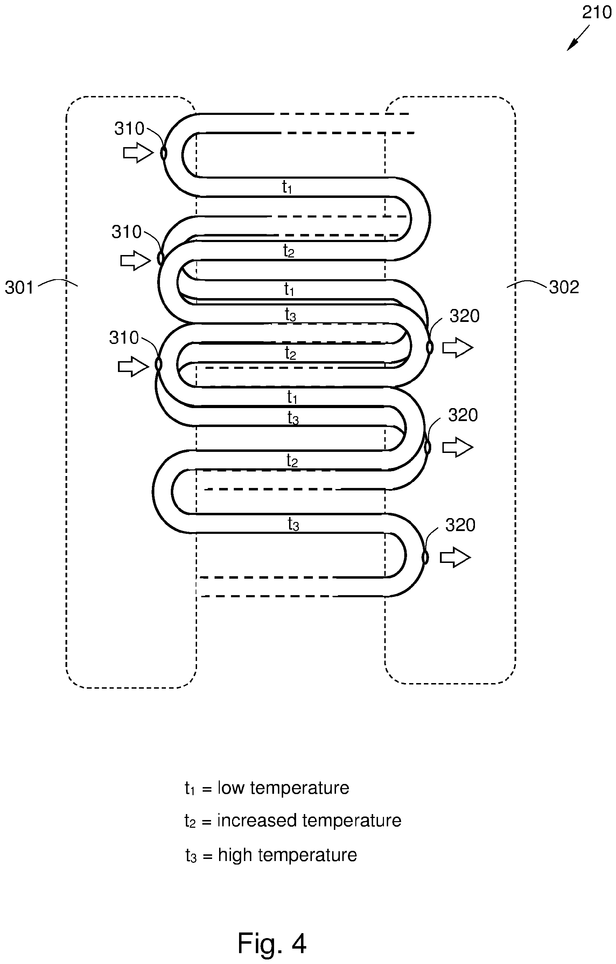

Figure 4 also schematically illustrates the stator winding 210, and in particular distribution of axially extending sections of the stator winding 210, and the distribution of the first set of holes 310/ the second set of holes 320, respectively. These distributions of the respective sets of holes 310, 320 may be distributed for allowing a hotter section t₃ of the hollow conductor 200 to be in vicinity of a cooler section t₁ of the hollow conductor 200.

The vertical extension of the stator winding 210 in Figure 4 is to be distributed in circumferential direction of the stator 120, in the stator slots 130.

The hollow conductor 200 forms the continuous wave winding 210 by uniform distribution around the stator periphery in a winding pattern in the stator slots 130, thereby forming multiple parallel paths between axial endings 301, 302 of the winding 210. The wave winding 210 may be distributed in several layers in each of the stator slots 130, such as for example 5-10 layers, or 6-8 layers.

The cooler section t₁ of the hollow conductor 200 will thereby absorb at least some heat from the hotter section t₃. In some embodiments, the flow direction of cooling fluid in the cooler section t₁ of the hollow conductor 200 and the hotter section t₃ of the hollow conductor 200 may be the same, i.e., they may form a parallel-flow heat exchange. In other embodiments, the flow direction of cooling fluid in the cooler section t₁ of the hollow conductor 200 and the hotter section t₃ of the hollow conductor 200 may be opposite to each other, i.e., they may form a counter-flow heat exchanger. The counter current design is the most efficient, in that it can transfer the most heat from the heat (transfer) medium per unit mass due to the fact that the average temperature difference along any unit length is higher.

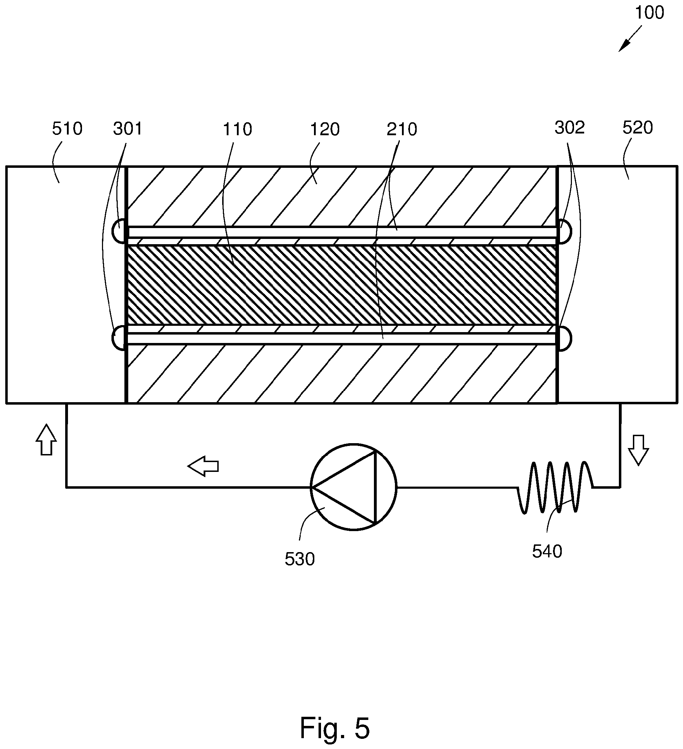

Figure 5 schematically illustrates an electrical machine 100 according to an embodiment. The first ending 301 of the stator winding 210 is flooded in cooling fluid in a first cooling cavity 510. The first cooling cavity 510 may be formed by a stator housing. Thereby, the first ending 301 of the winding 210 is submerged with the cooling fluid, creating an efficient cooling of the first ending 301. Submersion/ flooding of the end windings enables, apart from efficient cooling of the respective end windings, that cooling fluid easily flows into the holes 310, 320 in the end windings.

An integrated sealing element may be applied, for forming a seal against leakage of cooling fluid into an airgap between the stator 120 and the rotor 110. In case cooling fluid is allowed to enter the airgap, an increased friction between the rotor 110 and the stator 120 may affect the efficiency of the electrical machine 100. The integrated sealing element 310 may comprise for example rubber, silicone, nitrile, thermoplastic and/ or elastomeric materials, or similar. Superfluous cooling fluid may be evacuated from the first cooling cavity 510 via a hole and the superfluous cooling fluid may be provided to the sump.

At the opposite side of the stator 120 in axial direction, the second ending 302 of the stator winding 210 is flooded in cooling fluid in a second cooling cavity 520. The second cooling cavity 520 may also be formed by the stator housing. Thereby, the second ending 302 of the winding 210 is submerged with the cooling fluid, creating an efficient cooling thereof.

The respective end windings 301, 302 may be exposed for a large part or even the majority of the stator losses during some load conditions of the electrical machine 100. By submerging the end windings 301, 302 in the cooling fluid, they are efficiently cooled.

The electrical machine 100 may also comprise a pump 530. The pump 530 may be arranged for bringing the cooling fluid into continuous circulation, from the first cooling cavity 510, via the first set of holes 310 at the first axial ending 301 of the winding 210, through the hollow conductor 200, to the second cooling cavity 520, via the second set of holes 320 in the second axial ending of the winding 210.

The cooling fluid may then be brought to a heat exchanger 540 or similar arrangement where heat from the heated fluid is dissipated, before forwarding the cooling fluid to the first cooling cavity 510.

In some embodiments, the flowing direction of the pump 530 may be reversed. The cooling fluid may thereby be absorbed from the second cooling cavity 520 via the second set of holes 320, through the hollow conductor 200 to the first cooling cavity 510 via the first set of holes 310.

The cooling fluid will have its lowest temperature right after having passed the heat exchanger 540 and will have its hottest temperature after having passed the winding 210. In case the circulation is continuously made in the same direction; e.g., from the first cooling cavity 510 to the second cooling cavity 520, the first axial ending 301 of the winding 210 will be more efficiently cooled than second axial ending 302 of the winding 210, as the lower temperature of the cooling fluid at the first cooling cavity 510 will cool the temperature of the first axial ending 301 more efficiently. By occasionally reversing the flowing direction of the cooling fluid through the electrical machine 100, the temperature of hot spots of the winding 210 are more efficiently reduced, due to the more even heat distribution.

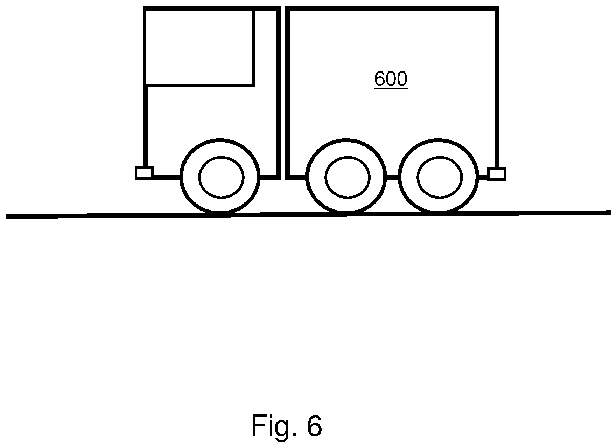

Figure 6 illustrates a vehicle 600 comprising an electrical machine 100 with a rotor 110, a stator 120, and a hollow conductor 200 forming the continuous wave winding 210 according to any above-described embodiment.

The vehicle 600 may be driver controlled or driverless autonomously controlled in different embodiments. The vehicle 600 may comprise a means for transportation in broad sense such as e.g., a truck, a car, a motorcycle, a trailer, a bus, a bike, a train, a tram, an aircraft, a watercraft, an unmanned underwater vehicle, a drone, a humanoid service robot, a spacecraft, or other similar manned or unmanned means of conveyance running e.g., on wheels, rails, air, water, or similar media.

The vehicle 600 may be an electric vehicle, a hybrid vehicle, a plug-in hybrid vehicle, etc., wherein the electrical machine 100 is configured for propelling the vehicle 600 and/ or for generating electrical energy for the vehicle 600 to use, depending on mode: motor mode or generator mode.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. The mere fact that certain measures are recited in mutually different dependent claims does not indicate that a combination of these measures cannot be used to advantage.

## Claims

1. A hollow conductor (200) forming a continuous wave winding (210) of a stator (120), wherein the stator (120) is forming an electrical machine (100) in conjunction with a rotor (110); and wherein the continuous wave winding (210) is formed by uniform distribution of the hollow conductor (200) around the stator periphery in a winding pattern forming multiple parallel paths between axial endings (301, 302) of the winding (210); wherein a first axial ending (301) of the winding (210) is flooded by cooling fluid in a first cooling cavity (510) and a second axial ending (302) of the winding (210) is flooded by cooling fluid in second cooling cavity (520);
and wherein
the first axial ending (301) of the winding (210) comprises a first set of holes (310); and
the second axial ending (302) of the winding (210) comprises a second set of holes (320);
thereby allowing cooling fluid to flow from the first cooling cavity (510), via the first set of holes (310), through a respective section of the hollow conductor (210), to the second cooling cavity (520) via the second set of holes (320), when the cooling fluid is acted upon by a pump (530).

2. The hollow conductor (200) according to claim 1, wherein the first set of holes (310) in the first axial ending (301) and the second set of holes (320) in the second axial ending (302) are distributed for allowing a hotter section (t₃) of the hollow conductor (200) to be in vicinity of a cooler section (t₁) of the hollow conductor (200).

3. The hollow conductor (200) according to any one of the previous claims, wherein the first set of holes (310) in the first axial ending (301) and the second set of holes (320) in the second axial ending (302) are distributed for allowing cooling fluid entering the first set of holes (310) in the first axial ending (301) to flow in the continuous wave winding (210) between the axial endings (301, 302) at least three times before entering the second cooling cavity (520) via the second set of holes (320).

4. The hollow conductor (200) according to any one of the previous claims, wherein the first set of holes (310) comprises one hole made in every third turn of the continuous wave winding (210) in the first axial ending (301); and wherein the second set of holes (320) comprises one hole made in every third turn of the continuous wave winding (210) in the second axial ending (302).

5. The hollow conductor (200) according to any one of the previous claims, wherein the flow of cooling fluid through the hollow conductor (200) is reversable, such that cooling fluid is absorbed from the second cooling cavity (520) via the second set of holes (320), through the hollow conductor (200) to the first cooling cavity (510) via the first set of holes (310).

6. An electrical machine (100), comprising:
a stator (120) configured to hold a continuous wave winding (210);
a rotor (110), configured to operate coaxially inside the stator (120); and
a hollow conductor (200) forming the continuous wave winding (210), according to any one of claims 1-5.

7. A vehicle (600) comprising an electrical machine (100) according to claim 6.
